# EUROPEAN PATENT APPLICATION

(11) **EP 3 872 031 A1**
(43) Date of publication of application: **01.09.2021**
(21) Application number: 20305194.1
(22) Date of filing: 27.02.2020
(51) Int. Cl.: C01B 32/192

(54) **GRAPHENIUM DISPERSIONS AND COMPOSITES, PROCESS FOR MAKING SAME, AND USES THEREOF**

(71) Applicant: Centre National de la Recherche Scientifique, 75016 Paris (FR); Université de Bordeaux, 33000 Bordeaux (FR)
(72) Inventor: HOF, Ferdinand, 33600 PESSAC (FR); DAILLEAU, Romain, 33400 TALENCE (FR); PÉNICAUD, Alain, 33000 BORDEAUX (FR); EWELS, Christopher Paul, 44300 NANTES (FR); CHE, Xiaoyang, 33400 TALENCE (FR)
(74) Representative: Novagraaf Technologies

(57) **Abstract**

The present invention relates to organic or aqueous graphenium dispersions and composites, process for preparing the same, and uses thereof.

## Description

### FIELD OF THE INVENTION

The present invention relates to organic or aqueous graphenium dispersions, process for preparing the same, and uses thereof. The invention also relates to graphenium deposits, films and coatings, as well as graphenium composites.

### BACKGROUND OF THE INVENTION

Carbon is known as having four unique crystalline structures or structure families: diamond, graphite, fullerenes and carbon nanotubes.

Graphene, or graphite's basic plane, which has long been considered as a virtual object, became a reality fairly recently thanks to the work of Novoselov et al. (K. S. Novoselov, A. K. Geim, S. V. Morozov, D. Jiang, Y. Zhang, S. V. Dubonos, I. V. Grigorieva, and A. A. Firsov, "Electric field effect in atomically thin carbon films", Science, 306, 666-669 (2004) **[1];** K. S. Novoselov, A. K. Geim, S. V. Morozov, D. Jiang, M. I, Katsnelson, I. V. Grigorieva, S. V. Dubonos, A. A. Firsov, "Two-dimensional gas of massless Dirac fermions in graphene", Nature, 438, 197-200 (2005) **[2]** which describe electronic properties of this singular object.

Since 2004 and the publication of Novesolov et al., the world of physics has taken a keen interest in the electronic properties of graphene or graphite isolated plane. Specifically, graphene is expected to efficiently solve many technological problems such as corrosion, electromagnetic shielding, thermal evacuation, mining pollution, end of life pollution, etc... and open up opportunities such as barrier films, high tech membranes, etc...

Liquid formulations of graphene are traditionally obtained either through reduced graphene oxide (RGO) or sonicated dispersions of graphite in organic or aqueous surfactant dispersions. A major drawback of RGO is that it retains a high defect density and employs harsh chemicals such as sulfuric acid and potassium permanganate. Sonicated dispersions employ CMR classified solvents such as NMP or environmentally non friendly surfactants. In addition, they have low lateral size graphene flakes due to sonication and present poor exfoliation performances and distribution of thicknesses. All of these problems have been solved by the use of graphenide solutions (WO 2009/087287 **[3]**) and their use for the preparation of stable organic or aqueous graphene dispersions (WO 2015/189335 **[4]**). These dispersions present highly exfoliated graphene, in water, without surfactant or sonication. However, these graphene dispersions (e.g., graphene water) require a first step to treat graphite with potassium (to prepare the corresponding donor-GIC), a hazardous substance that ignites in contact with water, presenting hazard issues for scale up.

Thus, there exists a real need for methods for solubilizing graphite that remedy these problems, drawbacks and obstacles known in the art, more particularly a method allowing to obtain graphene solutions that can readily be used for processing graphene for a given application, reducing the composite material manufacturing costs and improving accessibility to graphene in large quantity with high purity.

Accordingly, there exists a significant need for further improvements in and to liquid formulations of exfoliated graphene in organic or aqueous solvents that remedy these problems, drawbacks and obstacles known in the art, more particularly a method allowing to obtain graphene liquid formulations without having to resort to hazardous materials/substances. The present invention fulfills these needs and provides further related advantages.

### BRIEF DESCRIPTION OF THE DRAWINGS

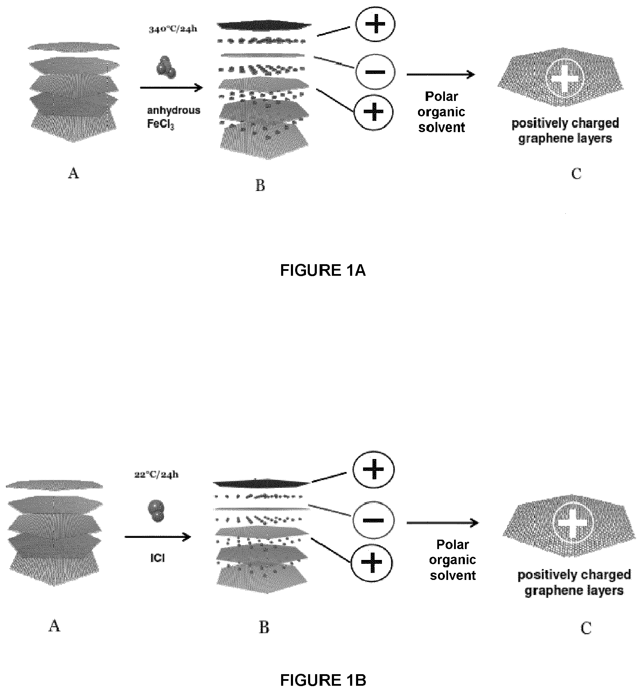

**Figure 1** schematically shows a process for preparing exemplary organic graphenium dispersions according to the invention.

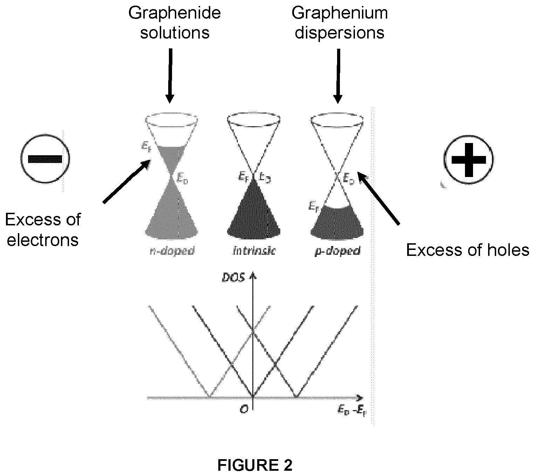

**Figure 2****:** comparative DOS of graphenide (negatively charged graphene sheets), graphene and graphenium (positively charged graphene sheets).

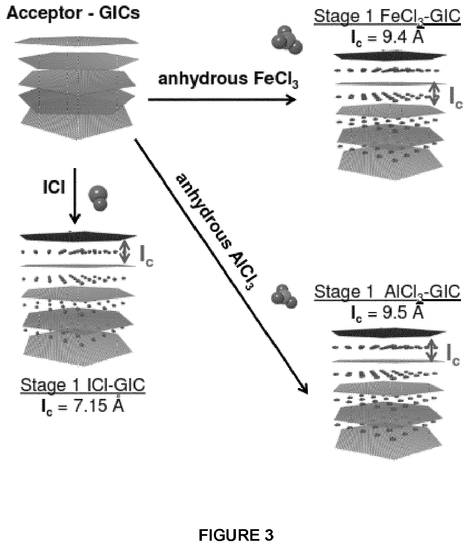

**Figure 3****:** Exemplary acceptor-GICs suitable for preparing aqueous or organic graphenium dispersions according to the invention.

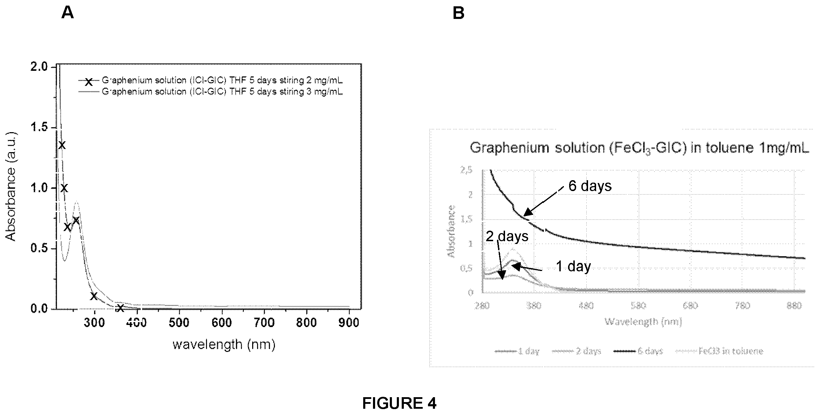

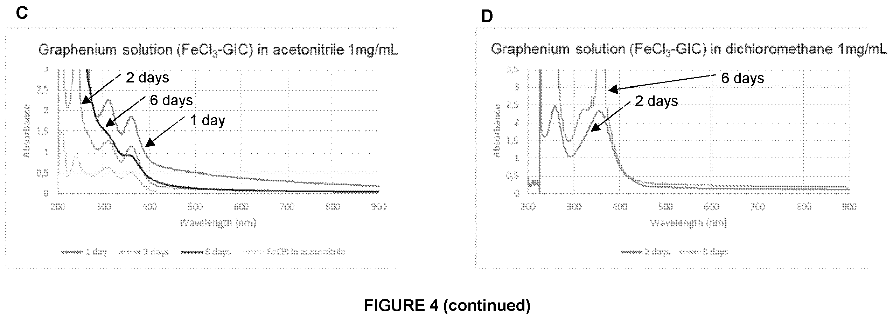

**Figure 4****:** UV/visible spectra of exemplary organic graphenium dispersions according to the invention. (A) FeCl₃-GIC in THF, (B) FeCl₃-GIC in Toluene, (C) FeCl₃-GIC in acetonitrile, and (D) FeCl₃-GIC in dichloromethane.

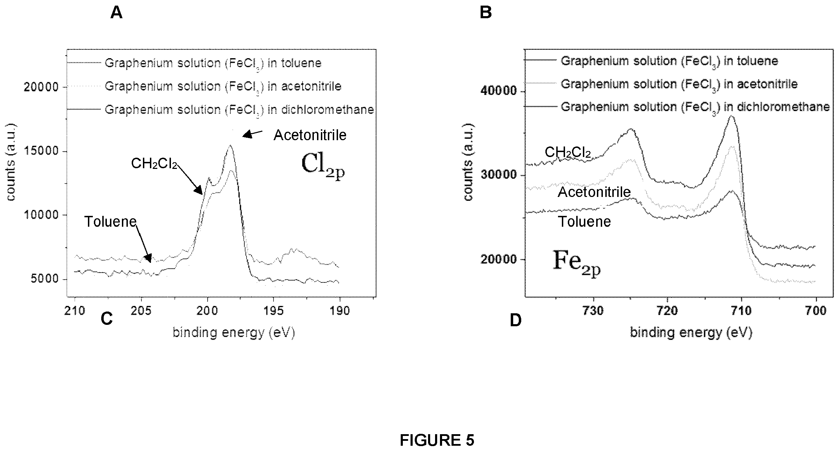

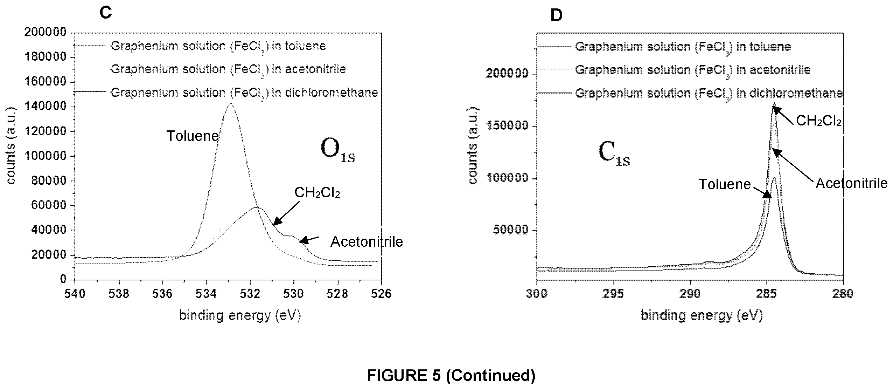

**Figure 5****:** XPS spectra of graphenium dispersion FeCl₃-GIC in THF filtered on PTFE filter. (A) Cl₂ₚ, (B) Fe₂ₚ, (C) O₁ₛ, and (D) C1s.

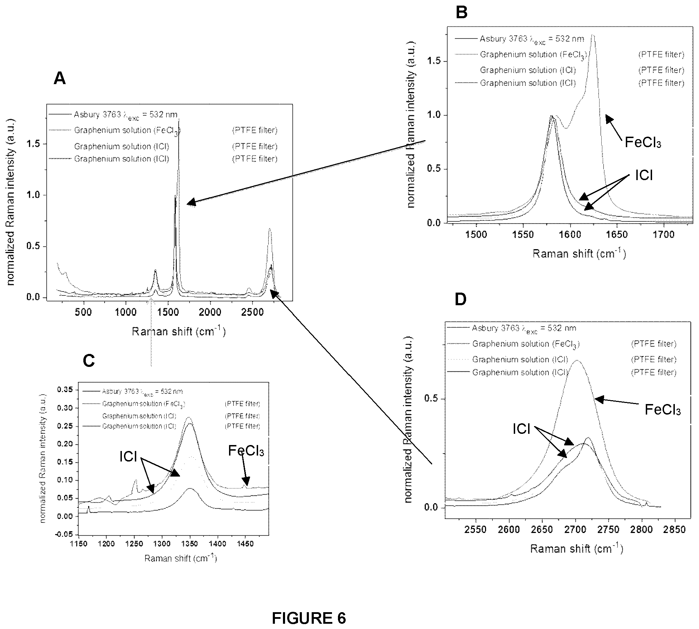

**Figure 6****:** Raman spectra of graphenium dispersion FeCl₃-GIC and ICI-GIC in THF filtered on PTFE filter.

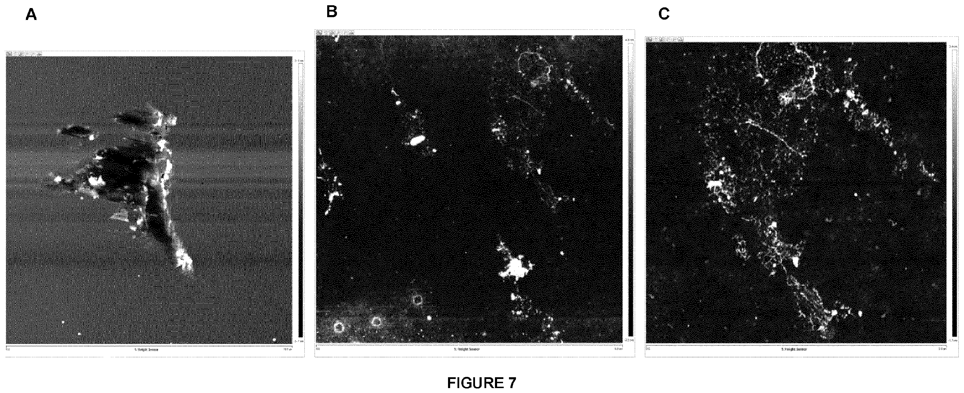

**Figure 7****:** AFM images of graphenium deposited on a Si/SiO₂ wafer. (A) FeCl₃-GIC in methanol (scale 16.6 µm, height (white regions): 31.5 nm), (B) FeCl₃-GIC in 1-butanol (scale 6.8 µm, height (white regions): 4.8 nm), and (C) FeCl₃-GIC in 2-butanol (scale 3.6 µm, height (white regions): 3.4 nm).

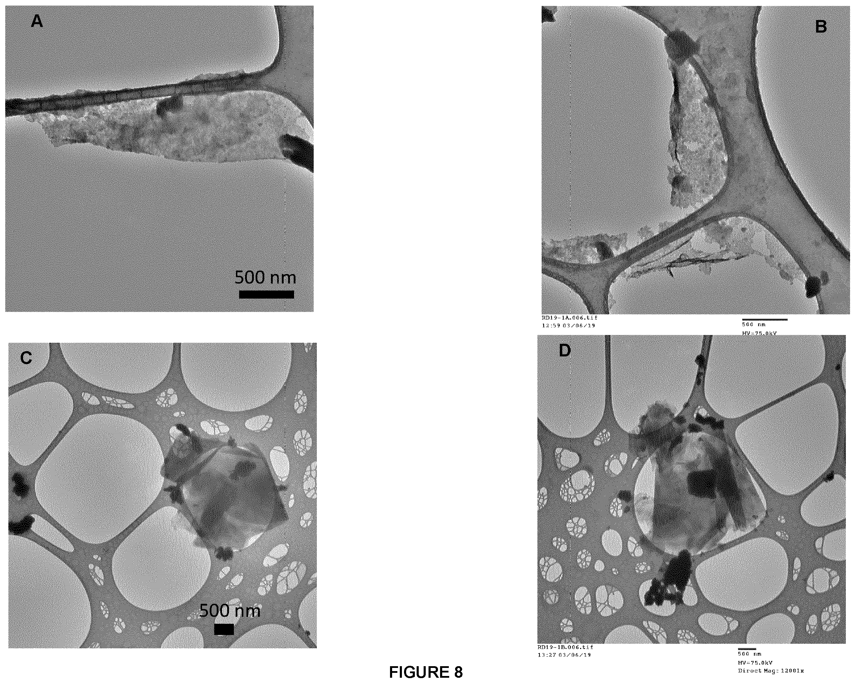

**Figure 8****:** TEM images of graphenium deposited on a lacey carbon grid. (A) and (B) FeCl₃-GIC in acetonitrile, (C) and (D) FeCl₃-GIC in dichloromethane.

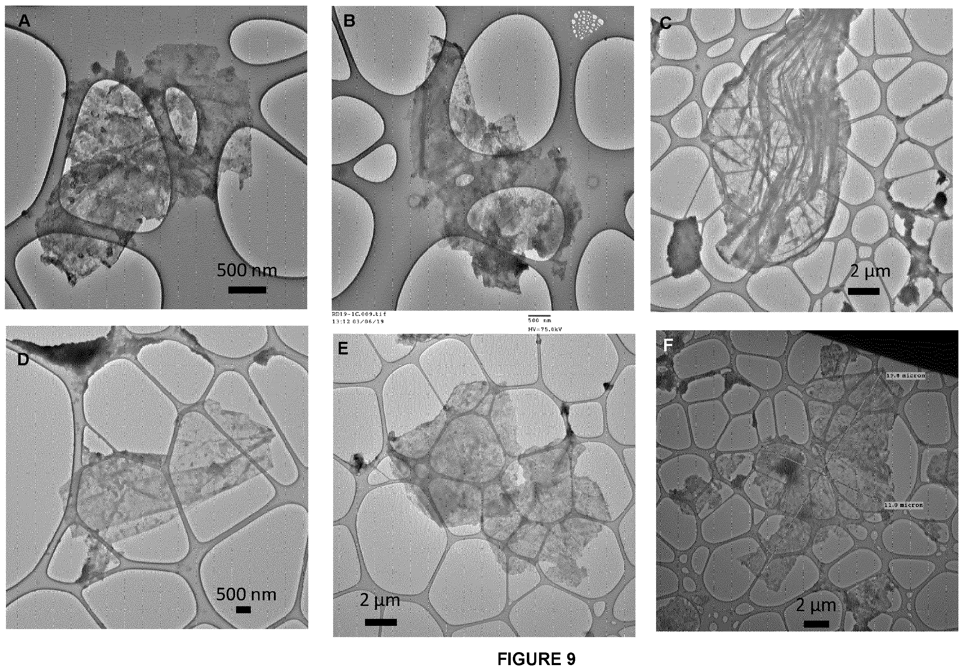

**Figure 9****:** TEM images of graphenium deposited on a lacey carbon grid. (A) and (B) FeCl₃-GIC in THF (2 days), (C)-(F) FeCl₃-GIC in THF (6 days).

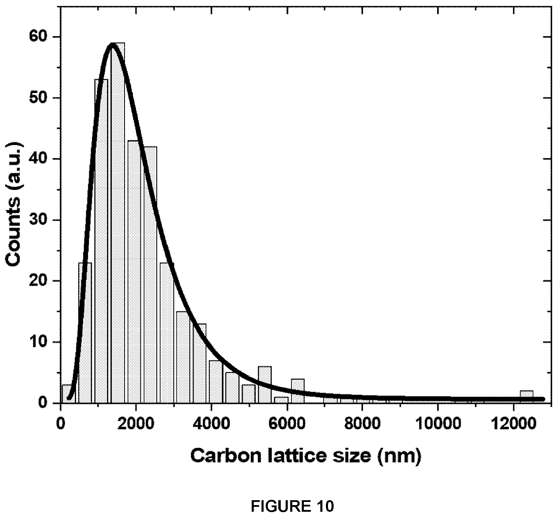

**Figure 10****:** Statistical analysis of carbon lattice size distribution of FeCl₃-based graphenium in toluene by TEM on lacey carbon grids. Average value=1.84 µm, standard deviation=1.25 µm.

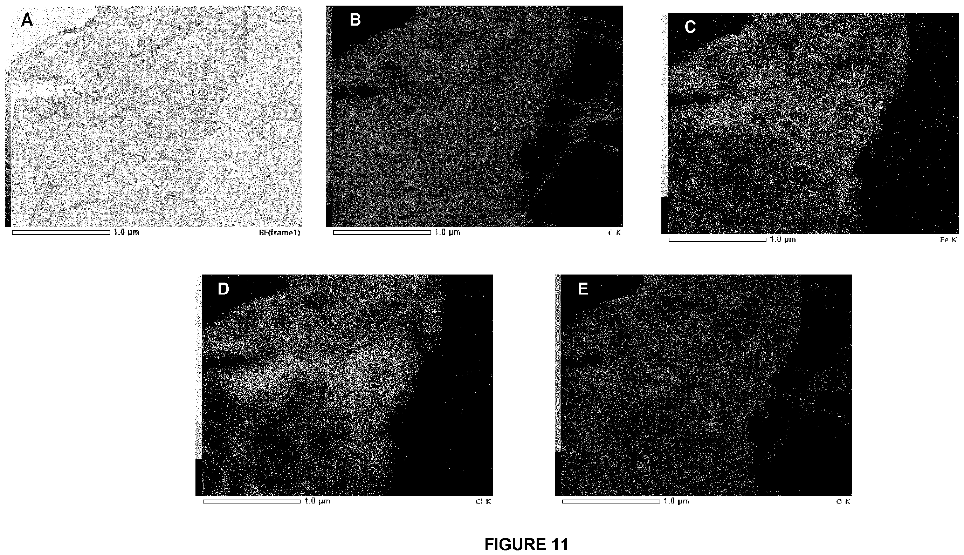

**Figure 11****:** STEM/EDX mapping of FeCl₃-based graphenium in THF deposited on a lacey carbon grid.(A) TEM image of FeCl₃-based graphenium, (B) Carbon mapping, (C) Fe mapping, (D) CI mapping, and (E) O mapping.

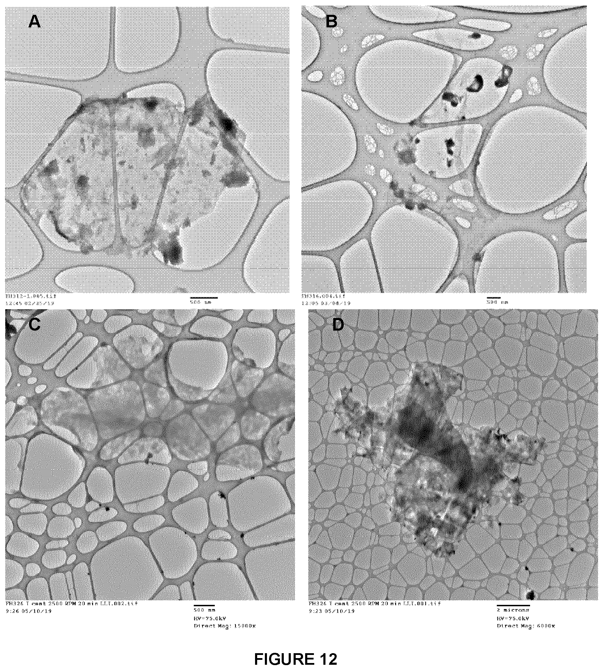

**Figure 12****:** TEM images of graphenium deposited on a lacey carbon grid. (A) and (B) ICI-GIC in methanol, (C) and (D) ICI-GIC in butanol.

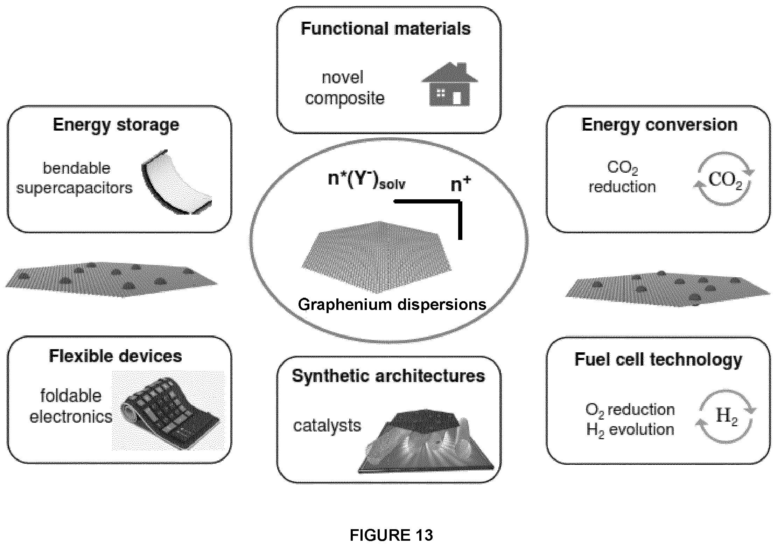

**Figure 13****:** Exemplary applications of graphenium dispersions according to the invention

While the graphenium dispersions and process of the present application are susceptible to various modifications and alternative forms, specific embodiments thereof have been shown by way of example in the drawings and are herein described in detail. It should be understood, however, that the description herein of specific embodiments is not intended to limit the application to the particular embodiment disclosed, but on the contrary, the intention is to cover all modifications, equivalents, and alternatives falling within the spirit and scope of the graphenium dispersions and process of the present application as defined by the appended claims.

### DEFINITIONS

Unless defined otherwise, all the technical and scientific terms used herein have the same meaning as those generally understood by one of ordinary skill in the art to which the invention pertains. Generally, the nomenclature used herein and the experiment methods, which will be described below, are those well-known and commonly employed in the art.

To facilitate an understanding of the present invention, a number of terms and phrases are defined below:
As used herein other than the claims, the terms "a," "an," "the," and/or "said" means one or more. As used herein in the claim(s), when used in conjunction with the words "comprise," "comprises" and/or "comprising," the words "a," "an," "the," and/or "said" may mean one or more than one. As used herein and in the claims, the terms "having," "has," "is," "have," "including," "includes," and/or "include" has the same meaning as "comprising," "comprises," and "comprise." As used herein and in the claims "another" may mean at least a second or more. As used herein and in the claims, "about" refers to any inherent measurement error or a rounding of digits for a value (e.g., a measured value, calculated value such as a ratio), and thus the term "about" may be used with any value and/or range.

The phrase "a combination thereof" "a mixture thereof" and such like following a listing, the use of "and/or" as part of a listing, a listing in a table, the use of "etc." as part of a listing, the phrase "such as," and/or a listing within brackets with "e.g.," or i.e., refers to any combination (e.g., any sub-set) of a set of listed components, and combinations and/or mixtures of related species and/or embodiments described herein though not directly placed in such a listing are also contemplated. Such related and/or like genera(s), sub-genera(s), specie(s), and/or embodiment(s) described herein are contemplated both in the form of an individual component that may be claimed, as well as a mixture and/or a combination that may be described in the claims as "at least one selected from," "a mixture thereof" and/or "a combination thereof."

As used herein, the term "and/or" means any one of the items, any combination of the items, or all of the items with which this term is associated.
As will be understood by the skilled artisan, all numbers, including those expressing quantities of ingredients, properties such as cavity/pore size and zeta potential, experimental conditions, and so forth, are approximations and are understood as being optionally modified in all instances by the term "about." These values can vary depending upon the desired properties sought to be obtained by those skilled in the art utilizing the teachings of the descriptions herein. It is also understood that such values inherently contain variability necessarily resulting from the standard deviations found in their respective testing measurements.
As used herein, the term "about" can refer to a variation of ±5% of the value specified. For example, "about 50" percent can in some embodiments carry a variation from 45 to 55 percent. For integer ranges, the term "about" can include one or two integers greater than and/or less than a recited integer. Unless indicated otherwise herein, the term "about" is intended to include values, e.g., concentration values, proximate to the recited range that are equivalent in terms of the functionality of the individual ingredient, the composition, or the embodiment.

As will be understood by one skilled in the art, for any and all purposes, particularly in terms of providing a written description, all ranges recited herein also encompass any and all possible subranges and combinations of subranges thereof, as well as the individual values making up the range, particularly integer values. A recited range includes each specific value, integer, decimal, or identity within the range. Any listed range can be easily recognized as sufficiently describing and enabling the same range being broken down into at least equal halves, thirds, quarters, fifths, or tenths. As a non-limiting example, each range discussed herein can be readily broken down into a lower third, middle third and upper third, etc.

### DETAILED DESCRIPTION OF CERTAIN PREFERRED EMBODIMENTS OF THE INVENTION

Illustrative embodiments are described below. In the interest of clarity, not all features of an actual implementation are described in this specification. It will of course be appreciated that in the development of any such actual embodiment, implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The graphenium dispersions and method in accordance with the present application overcome one or more of the above-discussed problems commonly associated with liquid formulations of graphene and related processes. Specifically, the method of the present application uses hazard-free steps and substances. This and other unique features of the method are discussed below and illustrated in the accompanying drawings.

The method will be understood, both as to its structure and operation, from the accompanying drawings, taken in conjunction with the accompanying description. Several embodiments of the method are presented herein. It should be understood that various components, parts, and features of the different embodiments may be combined together and/or interchanged with one another, all of which are within the scope of the present application, even though not all variations and particular embodiments are shown in the drawings. It should also be understood that the mixing and matching of features, elements, and/or functions between various embodiments is expressly contemplated herein so that one of ordinary skill in the art would appreciate from this disclosure that the features, elements, and/or functions of one embodiment may be incorporated into another embodiment as appropriate, unless otherwise described.

### Graphenium dispersions

In one aspect, the invention provides a dispersion of graphenium in a polar organic solvent system, water or a mixture of both. As such, there is provided:
- a dispersion of graphenium in a polar organic solvent system,
- a dispersion of graphenium in water, and
- a dispersion of graphenium in an aqueous polar organic solvent system.

Thus, the present invention provides organic or aqueous dispersions of graphenium. The solvent system may be water alone, a polar organic solvent system, or a mixture of both.

As used herein, the term "graphenium" refers to one or more individual positively charged graphene plane(s). In other words, graphenium is an oxidized form of graphene (removal of electron(s)). The "holes" (removed electron(s)) are delocalized over the carbon atoms forming the graphenium plane. The term "graphenium" encompasses positively charged single-layered graphene planes, and positively charged few-layered graphene planes. As such, a graphenium flake may contain several carbon layers packed on top of each other, bearing an overall positive charge ("holes") delocalized over the carbon atoms forming the carbon planes stack. The graphenium may be single-layered (a single individual positively charged graphene plane) or multi-layered (up to 10 graphene planes stacked on top of each other, the stack bearing a positive charge). In other words, a graphenium flake may be composed of a few layers, for example 1 to 10 layers, preferably 1 to 5 layers, preferably 1 to 3 layers of carbon atoms sheets, advantageously a single layer of carbon atoms sheet.

As used herein, the term "graphene", takes the conventional meaning often used in the modern scientific literature, and refers to graphitic material composed of a few layers, for example 1 to 10 layers, preferably 1 to 5 layers, preferably 1 to 3 layers of carbon atoms sheets. Fully exfoliated graphene refers to single-layered graphene sheets. Graphene thickness can be calculated from the number of layers multiplied by 0.335 nm (A-B stacked graphite) to 0.345 nm (turbostratic packing).

As used herein, "polar" when referring to organic solvents does not deviate from the conventional meaning and from common knowledge/usage in the field. In general, polar organic solvents include without limitation aprotic solvents having a dielectric constant ≥ 4 and a dipole moment ≥ 1.00 D, and protic solvents such as alcohols. As used herein, also encompassed by "polar organic solvents" are aromatic solvent exhibiting some level of polarity. As such, aromatic solvent having a dielectric constant ε ≥2.20 and a dipole moment > 0.30 are included within the scope of polar organic solvents useable in the context of the present invention. Throughout the present document, unless mentioned otherwise, all dielectric constant values (ε) are provided with reference to a temperature of 25°C. In other words, unless mentioned otherwise, the expression "dielectric constant ε ≥ n" means "dielectric constant ε ≥ n at 25°C". Polar organic solvents useable in the context of the invention are described in detail infra in the section dealing with a method for preparing the inventive graphenium dispersions.
Advantageously, organic or aqueous graphenium dispersions according to the invention are metastable.

As used herein, "metastable" when referring to graphenium dispersions according to the invention, takes the conventional meaning of thermodynamic metastability in the field of colloidal suspensions. In general, if several states are in principle accessible to a colloidal suspension under given conditions, that with the lowest potential is called the stable state, while the other states are described as metastable. Likewise, as used herein, "metastable dispersion" means that the dispersion is in a state of equilibrium corresponding to a thermodynamic potential local minimum.

Advantageously, organic or aqueous graphenium dispersions according to the invention are air-metastable.

As used herein, the term "air-metastable", when referring to aqueous or organic graphenium dispersions according to the invention, means "metastable in air" and refers to graphenium dispersions that are not oxygen- or water-sensitive. For example, aqueous or organic graphenium dispersions according to the invention are not sensitive to ambient air, and can readily be stored and manipulated in ambient air.

The aqueous or organic graphenium dispersions according to the invention may be stable for a long time (at least several days but more often several weeks or months) allowing processing without the need to remove the organic or aqueous solvent system.

Advantageously, the graphenium in the aqueous or organic graphenium dispersions according to the invention may be fully exfoliated. In exemplary embodiments, the aqueous or organic graphenium dispersions according to the invention may contain mainly, if not only, single layer graphenium. In exemplary embodiments, single layer graphenium present in the aqueous or organic graphenium dispersions according to the invention represents at least 50%, more preferably at least 75%, most preferably at least 90%, of carbonaceous material in the dispersion. In other words, in exemplary embodiments, multilayer graphenium present in the aqueous or organic graphenium dispersions according to the invention represents less than 50%, more preferably less than 25%, most preferably less than 10%, of carbonaceous material in the dispersion.

Also included in the scope of the present invention are aqueous or organic graphenium dispersions containing mainly, if not only, multi-layer graphenium (for example, few-layer graphenium). In exemplary embodiments, multi-layer graphenium (for example, few-layer graphenium) present in the aqueous or organic graphenium dispersions according to the invention represents at least 50%, more preferably at least 75%, most preferably at least 90%, of carbonaceous material in the dispersion. In other words, in exemplary embodiments, single-layer graphenium present in the aqueous or organic graphenium dispersions according to the invention represents less than 50%, more preferably less than 25%, most preferably less than 10%, of carbonaceous material in the dispersion.

Aqueous or organic graphenium dispersions according to the invention may contain a mixture of single-layer and multi-layer (e.g., few-layer) graphenium.

In exemplary embodiments, single layer and/or few layer graphenium in the aqueous or organic graphenium dispersions according to the invention may be present at a concentration ≥ 0.01 g/L, preferably ≥ 0.03 g/L, preferably ≥ 0.05 g/L, preferably ≥ 0.07 g/L, preferably ≥ 0.08 g/L, preferably ≥ 0.10 g/L, preferably ≥ 0.12 g/L, preferably ≥ 0.14 g/L, preferably ≥ 0.16 g/L, preferably ≥ 0.18 g/L, preferably ≥ 0.20 g/L. The presence of individualized single-layered graphenium in the dispersions may be characterized by Raman spectroscopy.

In yet another aspect, the present invention also provides surfactant-free aqueous or organic graphenium dispersions. One advantage of the invention is that no surfactant is needed to disperse graphite into single- or multi-layered graphenium, and to obtain dispersions that are stable over time. As used herein, the term "surfactant" refers to any substance which lowers the surface tension of the solvent in which it is used. Specifically, a surfactant as used herein refers to any substance which, at concentrations of 1 mM or 0.05% w/w (whichever may be the lowest) and at 25°C, reduces water-hexane interfacial tension by more than 2 mN/m.

Advantageously, the graphenium present in the aqueous or organic graphenium dispersions according to the invention originates from carbonaceous material (e.g., graphite) which has not been subjected to sonication at any stage of the process leading to graphenium. Accordingly, the graphenium present in the aqueous or organic graphenium dispersions according to the invention advantageously has minimal defects.

As used herein, the term "graphenium dispersion" refers to a composition where graphenium is in suspension or dispersed in a solvent. In other words, the dispersion contains graphenium particles dispersed in the solvent. Advantageously, the term "graphenium dispersion" in the context of the present invention preferably refers to fully exfoliated graphenium dispersion (i.e., the starting graphite material, which is composed of aggregated/stacked graphene planes, is separated into individualized single-layered graphenium).
The solvent may be water, an ionic aqueous solution, or a mixture of one or more organic solvents with water or an aqueous ionic solution, all of which may be fully or partially degassed, as described herein, in which case the graphenium dispersion is referred to as "aqueous graphenium dispersion".
Likewise, the solvent may be a polar solvent or a mixture of two or more polar organic solvents, all of which may be fully or partially degassed, as described herein, in which case the graphenium dispersion is referred to as "organic graphenium dispersion". Within the context of the present invention, dispersion is fundamentally defined as a metastable system, i.e. a system which phases will eventually separate after a certain amount of time. Graphenium flakes present in the organic or aqueous graphenium dispersions according to the invention may have a fairly large lateral size, up to the µm range. Typically, the graphenium flakes in the dispersions of the invention may have a lateral size between 100 nm and 100 µm, preferentially between 500 nm and 50 µm, between 800 nm and 40 µm, on average about 2 µm.

As used herein, the term "lateral size" refers to the largest dimension of the planar carbon atom sheet surface of the graphenium particles. The term is not to be confused with the thickness of the graphenium particles, which refers to the height of the stacked carbon atom planes making up the graphenium particles.

Graphenium flakes present in the organic or aqueous graphenium dispersions according to the invention may be fairly thin. Typically, the graphenium flakes in the dispersions of the invention may have a thickness ≤ 5 nm (fewer than 10 layers of carbon sheets).

### Process - organic graphenium dispersions

In yet another aspect, the present invention provides a process for preparing graphenium dispersions in polar organic solvent systems according to the invention (organic graphenium dispersions), comprising steps of:
(a) procuring an acceptor graphite-intercalation-compound; and
(b) mixing the acceptor graphite-intercalation-compound of step (a) with a polar organic solvent system to yield a dispersion of graphenium in the polar organic solvent system.

"Graphite intercalation compound" or "GIC" as used herein refers to a compound in which a layer of intercalant (oxidized or reduced agent) is situated in between a defined number of carbon layers (generally from 1 to 10 carbon layers). As such, GICs are compounds comprising at least two individual negatively or positively charged graphene planes, intercalated by positive or negative counter ions, respectively. Acceptor GICs are GICs which have been obtained by oxidation of graphite, whereas donor GICs, such as KC₈ are obtained by reduction of graphite. Consequently, the chemical and physical properties of GICs are dramatically altered in comparison to the starting graphite.

As used herein, the term "acceptor graphite-intercalation-compound" does not deviate from the conventional meaning and from common knowledge/usage in the field, and refers to GICs which have been obtained by oxidation of graphite. As such, acceptor GICs comprise at least two individual positively charged graphene planes intercalated by negative counter ions. The positively charged graphene planes in an acceptor GIC take the definition of « graphenium », as defined above : they may be single-layered multi-layered carbon atom planes. As such, the graphenium sheets in an acceptor-GIC may contain several carbon layers packed on top of each other, bearing an overall positive charge ("holes") delocalized over the carbon atoms forming the carbon planes stack. The graphenium sheets in an acceptor-GIC may be single-layered (a single individual positively charged graphene plane) or multi-layered (up to 10 graphene planes stacked on top of each other, the stack bearing a positive charge). In other words, graphenium sheets in an acceptor-GIC may be composed of a few layers, for example 1 to 10 layers, preferably 1 to 5 layers, preferably 1 to 3 layers of carbon atoms sheets, advantageously a single layer of carbon atoms sheet. An acceptor-GIC with the maximum loading of intercalant and the highest charge transfer from graphene sheets to oxidant is denoted « stage 1 acceptor-GIC » : single-layered positively charged graphene sheets intercalated with negative counter ions.

Advantageously, the acceptor GIC may be a stage-1 acceptor GIC. The "stage" of an acceptor-GIC may be adjusted depending on the stoichiometry between the starting graphite and the oxidant used to prepare the acceptor-GIC.

Acceptor GICs may be prepared by any method known in the art. Typically, acceptor GICs may be prepared by contacting graphite and a suitable oxidant. For example, acceptor GICs may be prepared by one of:
(i) vapour-phase oxidation of graphite using a suitable oxidant;
(ii) electro-chemical oxidation of graphite using a suitable oxidant;
(iii) oxidation of graphite using a suitable oxidant dissolved in a polar organic solvent system; or
(iv) exposure of graphite to a suitable liquid oxidant.

Upon contacting graphite with the oxidant, a redox reaction occurs:
Gr - n e⁻ -> Grⁿ⁺ (oxidation ; Gr = graphite)
Ox + n e⁻ -> n Ox⁻ (reduction)

Concomitantly to this redox reaction, graphite is intercalated by Ox⁻. The reaction written above is a simplification: sometimes, the reduced form of the oxidant may have undergone an atomic rearrangement. E.g. : Iₙ⁻ instead of I⁻, FeCl₄⁻ rather than FeCl₃⁻, ... In other words, disproportionation may occur in the carbon lattice.

The preparation of acceptor-GICs via oxidation of graphite is well known in the art. The persons skilled in the art will know how to identify the appropriate experimental conditions for implementing an oxidation method in the presence of an oxidant, for example in vapour phase, by electro-chemical means or in the liquid phase (with an oxidant dissolved in a polar organic solvent system, or by reacting with a liquid oxidant).

In exemplary embodiments, the acceptor graphite-intercalation-compound may be prepared by vapour-phase oxidation of graphite. In that case, the process comprises exposure of graphite to vapours of a suitable oxidant under reduced pressure. For example the person of ordinary skill in the art can draw from the teachings of Stumpp et al. in Materials Science and Engineering, 31 (1997) 53-59 **[5].** See also the Examples of the present disclosure.

The oxidation of graphite may also be carried out by electrochemistry. The electrochemical oxidation of graphite takes place with the insertion of a counter anion present in the solution. For example, the reader can draw from the teachings of J. Bottomley et al., Electrochemical preparation of salts from well-oriented graphite, J. Chem. Soc. (1963), p. 5674 **[6]** and D. Dumas et al., Comptes rendus hebdomadaires des seances de l'académie des sciences série C 265 (1967) p. 1395. **[7]**

In other exemplary embodiments, the acceptor graphite-intercalation-compound may be prepared by exposure of graphite to a liquid oxidant. In that case, the process comprises immersing graphite into a suitable liquid oxidant selected from halogen or interhalogen compounds, such as ICI. (cf. Examples)

The graphite useable in the context of the invention may be any type of graphite that can be intercalated, including disordered graphite, crystalline flake graphite, natural and lump graphite, highly ordered pyrolytic graphite (HOPG), graphitic nanofibres, and graphitic nanoplatelets For example, the graphite may be selected from at least one of natural graphite, synthetic graphite, expanded graphite, microcrystalline graphite and highly ordered pyrolytic graphite.

Oxidants useable in the context of the invention include all oxidants having a redox potential suitable to oxidize graphite. For example, the oxidant may be a halide-based oxidant selected from:
(a) halogen or interhalogen compounds, such as X₂, XX^{A}, X(X^{A})₃, X(X^{A})₅ or X(X^{A})₇;
(b) metal- or metalloid-halides, preferably from groups IB, IIIB, IVA, VB, VA, VIII, VIA, IIIA, VIIA,, IIB, VB the lanthanides, or the actinides; such as CuX₂, AuX₃, BX₃, AlX₃, GaX₃, InX₃, TIX₃, ZrX₄, HfX₄, SbX₅, TaX₅, FeX₃, CrX₃, CrO₂X₂, MoX₅, α-WX₆, UX₄, UO₂X₂, UX₆, ReX₄, CoX₃, RuX₃, RhX₃, PdX₄, PtX₄, IrX₄, YX₃, SmX₃, CdX₃, YbX₃, DyX₃, EuX₃, AsX₅, or SbX₅; or
(c) noble gas-halide compounds such as XeF₄, XeF₆ or XeOF₄;
(d) thionyl or sulfuryl halides, such as SOCl₂ or SO₂Cl₂;
wherein X independently represents a halide selected from F, Br, Cl or I, preferably F, Br or Cl; and X^{A} independently represents F, Br, Cl, preferably Cl.
Advantageously, the oxidant may be a halide-based oxidant selected from FeX₃, PdX₄, PtX₄ or IX^{A}; most preferably FeX₃ or IX^{A}; wherein X independently represents a halide selected from F, Br, Cl or I, preferably F, Br or Cl; and X^{A} independently represents F, Br, Cl, preferably Cl.

Advantageously, the oxidant may be selected from Br₂, ICl, IBr, IF, IF₃, ICl₃, BrF₃, IF₅, BrF₅, IF₇, CuCl₂, CuBr₂, AuCl₃, BCl₃, AlCl₃, GaCl₃, InCL₃, TlCl₃, ZrCl₄, HfCl₄, SbCl₅, TaCl₅, FeCl₃, CrCl₃, CrO₂Cl₂, MoCl₅, α-WCl₆, UCl₄, UO₂Cl₂, UF₆, ReCl₄, CoCl₃, RuCL₃, RhCl₃, PdCl₄, PtCl₄, IrCl₄, ICl₃, YCl₃, SmCl₃, CdCl₃, YbCl₃, DyCl₃, EuCl₃, AsF₅, SbF₅, XeF₄, XeF₆, XeOF₄, SOCl₂ or SO₂Cl_{2;} preferably FeCl₃, PdCl₄, PtCl₄, ICl, SOCl₂ or SO₂Cl₂; more preferably FeCl₃, PdCl₄, PtCl₄, ICl; most preferably FeCl₃ or ICl.

Examples of polar organic solvents that may be used to make up the polar organic solvent system used in step b) include:
- aprotic solvents having a dielectric constant ε ≥ 4 and a dipole moment ≥ 1.00 D, preferably a dielectric constant ε ≥ 4 and a dipole moment ≥ 1.50 D, preferably a dielectric constant ε ≥ 6.00 and a dipole moment > 1.00, preferably a dielectric constant ε ≥ 7.00 and a dipole moment > 1.00;
- aromatic solvents having a dielectric constant ε ≥2.20 and a dipole moment > 0.30; and
- protic organic solvents such as alcohols.

Advantageously, among the aprotic solvents, nitrile solvents, polar ethers, preferably having a dielectric constant ε ≥ 4 and a dipole moment ≥ 1.00 D, polar halogenated hydrocarbons, preferably having a dielectric constant ε ≥ 6 and a dipole moment ≥ 1.00 D, ketone solvents, carboxylic ester solvents, alkyl sulfoxide-containing solvents, and amide solvents may be used.

Advantageously, the polar organic solvent system used in step b) may comprise at least one electron-donating polar organic solvent.

Advantageously, the polar organic solvent system used in step b) may be anhydrous.

Advantageously, the polar organic solvent system used in step b) may comprise one or more polar organic solvent(s) selected from:
- aromatic solvents, preferably having a dielectric constant ε ≥2.20 and a dipole moment > 0.30, such as toluene, o-xylene or m-xylene;
- nitrile solvents such as acetonitrile;
- polar ethers, preferably having a dielectric constant ε ≥ 4 and a dipole moment ≥ 1.00 D, such as tetrahydrofuran (THF), methyl-THF (Me-THF), dimethoxyethane (DME), methyl tert-butyl ether (MTBE), diethyl ether, or CycloPentylMethylEther (CPME);
- polar halogenated hydrocarbons, preferably having a dielectric constant ε ≥ 6 and a dipole moment ≥ 1.00 D such as CH₂Cl₂;
- alcohols such as methanol, ethanol, n-propanol, i-propanol, n-butanol, 2-butanol, n-pentanol, 2-pentanol or n-hexanol; preferably methanol or n-butanol;
- ketone solvents such as acetone, 2-butanone, 2-pentanone, 3-pentanone, cyclopentanone, or cyclohexanone;
- carboxylic ester solvents such as methyl acetate, ethyl acetate, propyl acetate, butyl acetate or methyl propionate;
- alkyl sulfoxide-containing solvents such as dimethylsulfoxide (DMSO) or sulfolane; or
- amide solvents such as N-methylpyrrolidone (NMP), dimethylformamide (DMF), N-methylformamide (NMF), or dimethylacetamide (DMA).

Advantageously, the polar organic solvent system used in step b) may be aprotic; preferably toluene, acetonitrile, THF, CH₂Cl₂ or a mixture of two or more thereof; most preferably toluene.

The process according to the invention may be carried out under inert atmosphere or ambient air, advantageously under dry air or inert atmosphere (to gain in efficiency). As used herein, the expression "inert atmosphere" refers to a gas or a gaseous mixture such as argon, nitrogen, helium or a mixture of those. For example, step b) may be carried out under an oxygen and moisture-free atmosphere. Advantageously, step b) may be carried out under an argon, helium or nitrogen gas atmosphere. However, an inert atmosphere is not necessary to carry out the process of the present invention, as graphenium is somewhat stable to air.

The mixing step b) may be carried out at a temperature ranging from - 78°C to 202°C. For example, the mixing step b) may be carried out at a temperature of 20 to 25°C (room temperature).

Generally speaking, the process of the invention, more particularly the mixing step b) can be implemented with or without stirring. When a stirring system is used, it may be a mechanical or magnetic stirring system or sonication. In exemplary embodiments, the method may be carried out with a mechanical stirring. In other exemplary embodiments, the method may be carried with a magnetic stirring.

It should be noted that, although the process of the invention can be implemented with a stirring system comprising sonication, the latter is not necessary. In fact, a remarkable advantage of the present process is that it is based on a soft dissolution method, starting from neutral graphite, which precisely allows avoiding the use of sonication. Thus, the method of the invention allows obtaining large size graphenium flakes. For example, the graphenium flakes may have a lateral size up to the µm range. Typically, the graphenium flakes may have a lateral size between 100 nm and 100 µm, preferentially between 500 nm and 50 µm, between 800 nm and 40 µm, on average about 2 µm.

### Process - aqueous graphenium dispersions

In yet another aspect, the present invention provides a process for preparing graphenium dispersions in aqueous solvent systems according to the invention (aqueous graphenium dispersions). Such aqueous graphenium dispersions may be prepared from the organic graphenium dispersions described previously, by transferring to water or an aqueous solvent system a dispersion of graphenium in a polar organic solvent system. Accordingly, there is provided a process for preparing aqueous graphenium dispersions, comprising steps of:
(a) procuring an acceptor graphite-intercalation-compound;
(b) mixing the acceptor graphite-intercalation-compound of step (a) with a polar organic solvent system to yield a dispersion of graphenium in the polar organic solvent system; and
(c) transferring the graphenium dispersion obtained in step (b) into water or an aqueous solvent system.

Advantageously, when an aqueous solvent system is used in step c), it may be a mixture of water with the same polar organic solvent system used in step b).

Advantageously, the polar organic solvent used in step (b) may be fully or partially water-miscible. Solvents fully miscible in water include, but are not limited to tetrahydrofuran (THF), acetone, acetonitrile, dimethoxyethane (DME), alcohols such as such as methanol, ethanol, n-propanol, i-propanol, n-butanol, 2-butanol, n-pentanol, 2-pentanol or n-hexanol, and the like. Solvents partially miscible in water include, but are not limited to ethyl acetate, 2-butanone, methyl *tert*-butyl ether (MTBE), diethyl ether, dichloromethane, CycloPentylMethylEther (CPME), and the like.

Advantageously, the polar organic solvent used in step (b) may have a boiling point lower than water (i.e., the solvent boiling point is < 100°C at 1 atmosphere (1.01325. 10⁵ Pa)), and the process may further comprise a step of evaporating the polar organic solvent, to yield a dispersion of graphenium in water. Advantageously, the evaporation may be carried out by any conventional method known in the art. For example, a rotary evaporator may be used or the solvent mixture might simply be left standing for evaporation. Advantageously, in all these methods, care should be taken not to heat the mixture.

Accordingly, the process allows to achieve stable graphenium dispersions in water alone, or in aqueous solvent systems (mixture of organic solvent and water).

The pH of the water used in step c) (alone or in mixture with an organic solvent system) may be adjusted to vary its ionic strength. For example, the pH may be adjusted by addition of any base or acid, such as, but not limited to, HCl, HNO₃, acetic acid, NaOH, KOH, NH₄OH. Any base or acid known in the art may be used to adjust the ionic strength of the water (alone or in mixture with an organic solvent system) used in step c). The modulation of pH presents an advantage in stabilizing the positively charged graphenium in the dispersion.

For any variant described herein, advantageously, when carrying out step c), the ratio of polar organic solvent used in step b) to water may be appropriately selected/adjusted/optimized by simple eye (or optical microscope) observation of dispersion stability.

In yet another aspect, the invention provides the use of a polar organic solvent for solubilising an acceptor GIC. Advantageously, aprotic solvents having a dielectric constant ≥ 4 and a dipole moment ≥ 1.00 D, alcohols, or aromatic solvent having a dielectric constant ε ≥2.20 and a dipole moment > 0.30, may be used for that purpose. Among the aprotic solvents, nitrile solvents, polar ethers, preferably having a dielectric constant ε ≥ 4 and a dipole moment ≥ 1.00 D, polar halogenated hydrocarbons, preferably having a dielectric constant ε ≥ 6 and a dipole moment ≥ 1.00 D, ketone solvents, carboxylic ester solvents, alkyl sulfoxide-containing solvents, and amide solvents. Examples of suitable polar organic solvents for solubilising an acceptor GIC include:
- aromatic solvents, preferably having a dielectric constant ε ≥2.20 and a dipole moment > 0.30, such as toluene, o-xylene or m-xylene;
- nitrile solvents such as acetonitrile;
- polar ethers, preferably having a dielectric constant ε ≥ 4 and a dipole moment ≥ 1.00 D, such as tetrahydrofuran (THF), methyl-THF (Me-THF), dimethoxyethane (DME), methyl tert-butyl ether (MTBE), diethyl ether, or CycloPentylMethylEther (CPME);
- polar halogenated hydrocarbons, preferably having a dielectric constant ε ≥ 6 and a dipole moment ≥ 1.00 D such as CH₂Cl₂;
- alcohols such as methanol, ethanol, n-propanol, i-propanol, n-butanol, 2-butanol, n-pentanol, 2-pentanol or n-hexanol; preferably methanol or n-butanol;
- ketone solvents such as acetone, 2-butanone, 2-pentanone, 3-pentanone, cyclopentanone, or cyclohexanone;
- carboxylic ester solvents such as methyl acetate, ethyl acetate, propyl acetate, butyl acetate or methyl propionate;
- alkyl sulfoxide-containing solvents such as dimethylsulfoxide (DMSO) or sulfolane; or
- amide solvents such as N-methylpyrrolidone (NMP), dimethylformamide (DMF), N-methylformamide (NMF), or dimethylacetamide (DMA).

### Graphenium deposits, films and coatings

In a variant, the process may further optionally comprise a step d) of depositing the organic graphenium dispersion of step b) or the aqueous graphenium dispersion of step d) on a given substrate. Preferably, this deposition step may be carried out under inert atmosphere, although not necessarily (deposition may be carried out under ambient air). Once the deposition has been performed and the solvent has been eliminated, the graphenium planes then interact with the substrate surface and remain stabilised.

The deposition step may be carried out by a simple deposition (drop-casting) of a quantity of aqueous or organic graphenium dispersion on a substrate, followed by the evaporation of the aqueous and/or organic solvent so as to isolate the graphenium.

The deposition step d) may also be carried out by application, for example using a brush or any other tool allowing the deposition of a nanocarbon dispersion film onto a substrate.

The deposition step d) may also be carried out by dip-coating. For example, the substrate can be dipped into the aqueous or organic graphenium dispersion for some time so as to allow the adsorption of the graphenium on the surface of the substrate. The substrate may then be removed from the aqueous or organic graphenium dispersion, preferably with a uniform speed to obtain a uniform coating, and the water and/or the organic solvent may then be evaporated from the substrate.

The deposition step d) may also be implemented by spin coating. For example, a droplet of aqueous or organic graphenium dispersion can be deposited on a rotating substrate, optionally at high temperature. Preferably, the rotation is kept constant during the whole process so as to obtain a uniform coating, and the water and/or the solvent is then evaporated. When the spin coating is carried out at high temperature, the temperature can be between 10 and 200°C.

The deposition step d) may also be performed by spray-coating, optionally on a heated substrate.

The deposition step d) may be performed by diverse ways of coating, such as roll to roll deposition, Dr Blade coating, and the like.

Such methods are known to the persons skilled in the art who will know how to adapt the experimental conditions depending on the parameters such as the nature of the substrate, interactions between the substrate and the graphenium, the wettability of the substrate by the aqueous or organic graphenium dispersion, and other relevant parameters the persons skilled in the art will appreciate.

Accordingly, the process according to the invention may further comprise a step of depositing the graphenium dispersion obtained in step b) on a substrate, to form a film or a coating. The process according to the invention may additionally comprise a step of evaporating the polar organic solvent from the substrate.

The substrates that may be used in the context of the invention include, in a non-limiting way, ceramics, metals, glass, silica, silicon, molybdenite (MoS₂), mica, graphite and/or plastics. Advantageously, the substrate can be any known substrate which is used and/or adapted to depositing carbon nanotubes, nanodiamonds, carbon nanohorns, graphene and fullerenes-type materials. For example, the substrate can be HOPG (highly oriented pyrolytic graphite), Si/SiO₂ wafers, mica, glass, MoS₂ and all kinds of plastics suitable for that purpose.

Advantageously, the substrate surface may be functionalised or modified prior to depositing the aqueous or organic graphenium dispersion according to the invention.

For example, the modification of the substrate surface can be carried out by exposing the substrate to an ionic solution containing anions that may participate in an ionic exchange with the counter anions existing on the exfoliated faces of the graphenium sheets, thereby resulting in a favourable negative polarisation of the substrate surface when the latter is contacted with the organic or aqueous graphenium dispersion resulting from step b) or c), respectively. For example, the substrate surface may be modified by dip-coating in the suitable ionic solution. The substrate can then be dried to evaporate the solvent of the ionic solution prior to depositing the organic or aqueous graphenium dispersion.

The person skilled in the art will know how to select the appropriate ionic solutions for this purpose and can draw for example from III et al., Biophys. J; 1993, 64: 919-924 [8] for an exemplary reduction to practice of this concept.

The substrate can also be modified by depositing a monomolecular layer of a compound to obtain a hydrophobic surface. For example, the substrate (e.g., mica) can be coated with a polylysine layer according to protocols well-known to the person skilled in the art.

Other types of surface modifications of substrates can also be considered. Generally speaking, any surface modification method known to the person skilled in the art can be used. The selection of the modification type will depend on the nature of the substrate, the aqueous solution used (water or ionic solution), the organic solvents used and the desired physico-chemical interactions at the substrate surface for improving the quality of the graphenium deposits. Specifically, electrostatic interactions can interfere between the graphenium sheets and the substrates upon the deposition step, depending on the state of the substrate surface. More particularly, unfavourable interactions may occur if the substrate comprises positive charges on the surface.

The film or coating resulting from deposition of the aqueous or organic graphenium dispersion on a substrate may contain counter anions still embedded within the graphenium carbon lattice and/or present on the exfoliated surface of the graphenium material (from the acceptor-GIC from which the graphenium dispersion was obtained). The process according to the invention may additionally comprise a step of rinsing away the intercalant anion from the graphenium material deposited on the substrate. This may be accomplished, for example, by using an aqueous solution containing a suitable counter anion that will replace the intercalant anion for charge balance. For example, an aqueous solution containing OH- anions may be used to rinse away the intercalant / counter anion present on the deposited graphenium material.

Thus, in one aspect, there is also provided the use of an aqueous or organic graphenium dispersion obtainable according to a method of the invention, for depositing graphenium on a substrate. For example, the aqueous or organic graphenium dispersion obtainable according to a method of the invention may be used for the preparation of transparent conducting films of graphenium.

In yet another aspect, the invention relates to a deposit, film or coating comprising graphenium.

In yet another aspect, the invention relates to graphenium obtainable by a method according to the invention. The graphenium can be in the form of isolated graphenium planes and/or graphenium strips. For example, the graphenium planes can be deposited onto a substrate or can be mixed with another material.

### Graphenium composites

In yet another aspect, the invention provides composite materials comprising graphenium. Advantageously, the graphenium composite material may comprise graphenium sheets bearing metallic particles embedded with the graphenium carbon lattice, advantageously finely divided metallic particles. The metal particles may be adsorbed on/ attached to the graphenium flake. The metallic particles may be metal nanoparticles. As used herein, the term "metal nanoparticle" refers to metal particles of roughly spheroidal shape whose diameter is in the nanometer range. For example, the finely divided metallic particles adsorbed on/ attached to the graphenium flake may have a diameter from 0.5 to 100 nm, preferably from 0.5 to 20 nm, preferably from 0.5 to 15 nm, preferably from 0.5 to 10 nm, preferably from 0.5 to 5 nm.

In still another aspect, the invention provides graphenium composites obtainable by a method according to the invention.

Thus, in one aspect, there is also provided the use of an aqueous or organic graphenium dispersion obtainable according to a method of the invention, for depositing graphenium composites on a substrate. The invention also provides the use of an aqueous or organic graphenium dispersion obtainable according to a method of the invention, for obtaining graphenium composites.

As discussed previously, films or coatings resulting from deposition of the aqueous or organic graphenium dispersion according to the invention on a substrate may contain counter anions still embedded within the graphenium carbon lattice and/or present on the exfoliated surface of the graphenium material (from the acceptor-GIC from which the graphenium dispersion was obtained). The material deposited on the substrate is therefore a graphenium composite *per se*, which may find use in a variety of applications. In particular, as transpires from the contents of the present disclosure, the deposited graphenium material may contain halide-, metal- or metalloid-based counter anion species at the exfoliated surface of graphenium or between the surfaces of two exfoliated graphenium sheets. Accordingly, graphenium composites according to the invention may find use in any application where such counter anion species can be useful.

When a metal halide is used to form the precursor acceptor-GIC use to prepare the graphenium dispersions according to the process of the invention, finely divided metal particles are detected on the graphenium planes (i.e., roughly spheroidal metal nanoparticles having a diameter from 0.5 to 100 nm, preferably from 0.5 to 20 nm, preferably from 0.5 to 15 nm, preferably from 0.5 to 10 nm, preferably from 0.5 to 5 nm). This is the case for example, when FeCl₃-GIC is used to prepare an aqueous or organic dispersion according to the invention: finely divided Fe particles are embedded in the carbon lattice of the graphenium planes. Without wishing to be bound by any particular theory, it is proposed that a disproportionation phenomenon occurs after intercalation of the initial metal-based anion between the graphenium sheets, which leads to the formation of metal particles on the carbon lattice. The metal particles are typically adsorbed on/ attached to the graphenium flake but the metal species is no longer intercalated. This gives rise to a brand new type of carbonaceous composite material: metal-graphenium composites (graphenium-supported metal-based composites), which are air-stable and can be used in a variety of applications where metal-based catalysts are important.

For example, the graphenium composites according to the invention, such as graphenium-supported metal-based composites (for example those prepared from Fe-based acceptor GICs), may be used as catalytic material.

For example, the graphenium composites according to the invention, in particular graphenium-supported metal-based composites such as Fe-graphenium composites, may find use:
- as electrode material for use in electrocatalysis, for example for applications in fuel cell and energy storage technology;
- as electrocatalyst for oxygen reduction reaction (ORR) or oxygen evolution reaction (OER);
- as bifunctional electrocatalyst for oxygen reduction reaction (ORR) and oxygen evolution reaction (OER); as such, graphenium composites of the invention may be useful for fuel cells (ORR) but also for energy storage (OER).
- as catalyst for gas-phase chemical reactions, such as hydrogenation of CO in the Fischer-Tropsch process;
- as slurry catalyst for liquid-phase chemical reactions, such as liquid phase oxidation processes (such as oxidations of aldehydes to carboxylic acids, benzyl alcohol to benzaldehyde, vanillyl alcohol to vanillin) or liquid phase reduction reactions; and/or
- as catalyst for CO₂ reduction and energy conversion.

In exemplary embodiments of the use of aqueous or organic graphenium dispersions according to the invention for preparing graphenium composite materials, the composite material may comprise, in addition to the graphenium material, other materials conventionally used in composite materials, for example fillers. For example, the composite material may contain carbon nanotubes, in addition to graphenium obtainable by the method of the present invention. Such carbon nanotubes can be obtained by conventional manufacturing methods, for example by laser ablation and/or electric arc. They can be in the form of a solution in a polar aprotic solvent such as described in documents Penicaud et al., "Spontaneous dissolution of a single-wall carbon nanotube salt", J. Am. Chem. Soc., 27, 8-9, 2005 [9**];** WO 2005/073127 **[10].**

The fillers used in the composition of said composite materials, including graphenium obtainable by the method of the present invention, can have a nanometric and/or micrometric size.

"Nanometric size material" a used herein refers to a material whose size is of a few nanometres in at least one of the space dimensions. For example, the size of the material in at least one of the space dimensions is between 1 and 20 nm, preferably between 1 and 2 nm.

"Micrometric size material" a used herein refers to a material whose size is between 1 and 100 microns.

The composite material may comprise only micrometric size fillers, or only nanometric size fillers, or a mixture of micro and nanometric size fillers (see for example FR 2 873 381 **[11]** where composite materials comprising nano- and micro-metric fillers in the same material are described).

### Advantages

As will be readily understood from reading the present disclosure, for the first time to the inventors' knowledge, the present invention allows successful solubilization of acceptor-GICs in a polar organic solvent system or in an aqueous solvent system, including water.

The resulting graphenium dispersions are stable over time, and can therefore be handled and/or stored under ambient air. In other words, the present invention allows to effectively produce stable liquid formulations of graphenium. Air stable graphenium dispersions have been obtained that do not necessarily need inert atmosphere to be prepared.

The graphenium dispersions of the invention have the same advantage of starting with a graphite intercalation compound where the van der Waals interactions between the graphene layers have been replaced by electrostatic interactions and the graphene planes have been moved apart from each other (from 3.34 A to about 9 A). They differ from graphenide solutions in that they do not need potassium, a highly hazardous substance, to be prepared.

When using metal halide (e.g., iron chloride) acceptor GICs, finely divided metal (e.g., iron) is detected on the graphenium flakes, making this composite material very promising as electrocatalysts. The metal-graphenium composites of the present invention are believed to be one of the potential candidates to replace the commercial Pt- or Rh-based catalysts used notably for oxygen reduction reaction (fuel cell technology) and oxygen evolution reaction (energy storage).

The organic or aqueous graphenium dispersions of the invention, and related process for their preparation, are advantageous compared to known processes in that no hazardous substance need to be used (no potassium metal, as opposed to graphene solutions made from graphenide material (negatively charged graphene).

### EQUIVALENTS

The representative examples that follow, together with the appended Figures, are intended to help illustrate the invention, and are not intended to, nor should they be constructed to, limit the scope of the invention. Indeed, various modifications of the invention and many further embodiments thereof, in addition to those shown and described herein, will become apparent to those skilled in the art from the full contents of this document, including the examples which follow and the references to the scientific and patent literature cited herein. It should further be appreciated that the contents of those cited references are incorporated herein by reference to help illustrate the state of the art.

The following examples contain important additional information, exemplification and guidance that can be adapted to the practice of this invention in its various embodiments and the equivalents thereof.

### EXAMPLES

The process and graphenium dispersions according to the present invention and their reduction to practice can be understood further by the examples that illustrate how some of the processes may be carried out. It will be appreciated, however, that these examples should not be construed to limit the invention. Variations of the invention, now known or further developed, are considered to fall within the scope of the present invention as described herein and as hereinafter claimed.

### Example 1 - Synthesis of ICI-GIC

600 mg (50 mmol) of flake graphite and 1.62 g (10 mmol) iodine monochloride (stoichiometry ICI-C5) were placed inside a 50 ml argon filled Schlenk flask. Immediately, the disappearance of the liquid ICI and the expansion of the volume of the graphite were visible. The Schlenk flask was closed with a glass cap and the sample was allowed to equilibrate for 24 h under constant pressure. The resulting graphite intercalation compound (GIC), C₅ICI was isolated and used without further purification.

The resulting ICI-GIC was characterized by X-ray diffraction and Raman spectroscopy.

### Example 2 - Synthesis of FeCl₃-GIC

600 mg (50 mmol) of flake graphite and 0.81 g (5 mmol) anhydrous FeCl₃ (stoichiometry FeCl₃-C10) were weighted inside an argon filled glove box and added into a glass tube. Subsequently, the glass tube was connected to a vacuum pump, then evacuated at 1.10⁻² mbar and sealed afterwards. The sealed glass tube was placed inside an oven at 340 °C for 24h. Afterwards, the sample was cooled down by 5 K/min until room temperature is reached. The glass tube was brought back into the glove box, was opened, and the FeCl₃ graphite intercalation compound was isolated and used without further purification.

The resulting FeCl3-GIC was characterized by X-ray diffraction and Raman spectroscopy.

### Example 3 - Graphenium dispersion in a polar organic solvent

200 mg of the as prepared acceptor-GIC from Example 1 or 2 were mixed to with 100 mL of the anhydrous solvent (THF, toluene, acetonitrile, methanol, butanol, dichloromethane) under inert condition in a 250 mL Erlenmeyer flask and the dispersion was stirred for 5 days by the aid of a PTFE coated magnetic stirring bar. Afterwards, the stirring was stopped and the sample was left for sedimentation for 24 h. The faint yellow to gray upper dispersion was retained. The concentration of the graphenium dispersion was determined by dry extracts as 0.08 ±0.02 mg/mL.

The results are summarized in Table 1.

**Table 1. Concentration of graphenium dispersions (mg/mL)**

| **Acceptor GIC used** | **THF** | **Absolute THF** | **Toluene** | **MeCN** | **MeOH** | **BuOH** | **CH₂Cl₂** |
|---|---|---|---|---|---|---|---|
| | | | | | | (n-BuOH or 2-BuOH) | |
| **FeCl₃-GIC** | nd | nd | 0.02-0.08 | nd | nd | nd | nd |
| **ICI-GIC** | 0.05 | 0.08 | nd | 0.03 | 0.01 | 0.02 | nd |

| | | | | | | | |
|---|---|---|---|---|---|---|---|
| nd: graphenium dispersions prepared, but graphenium concentrations not determined | | | | | | | |

The graphenium dispersions have been characterized either in liquid phase, or through deposits by UV-Vis/nIR, transmission electron microscopy (TEM), Raman spectroscopy, Electron energy loss spectroscopy, all confirming the successful preparation of graphenium dispersions in liquid phase, which are stable for a long time.

### Example 4 - Graphenium dispersion in water

A dispersion of graphenium in an organic solvent (having a boiling point lower than that of water) from Example 3 was injected in water. The organic solvent was left to evaporate leaving a suspension of graphenium in water. The aqueous graphenium suspension remained stable up to 1 or 2 weeks, allowing processing.

The experiment was repeated using a dispersion of graphenium in acetonitrile (instead of THF). The following organic dispersions from Example 3 were used to prepare the graphenium dispersions in water:

| **Acceptor GIC used** | **THF** | **Absolute THF** | **MeCN** |
|---|---|---|---|
| **ICI-GIC** | 0.05 mg/mL | 0.08 mg/mL | 0.03 mg/mL |

The resulting aqueous graphenium suspension remained stable up to 1 or 2 weeks, allowing processing/handling. The results are summarized in Table 2.

**Table 2 : Stability of graphenium dispersions in water**

| **Volume ratio organic dispersion:water** | **THF** | **Absolute THF** | **MeCN** |
|---|---|---|---|
| 2:1 | 1 week | 1 week | 1 week |
| 1:1 | 1 week | 1 week | 1 week |
| 1:2 | > 1 week | > 1 week | > 1 week |
| 1:4 | > 1 week | > 1 week | > 1 week |
| 1:8 | > 1 week | > 1 week | > 1 week |

THF and acetonitrile being both solvents with a boiling point below that of water, after injection of the organic graphenium dispersion in water, the organic solvent simply evaporates away leaving a suspension of graphenium in water.

### Example 5 - Aqueous graphenium dispersion

200 mg of the as prepared acceptor-GIC from Example 1 or 2 is mixed to with 100 mL of anhydrous dimethylformamide under inert condition in a 250 mL Erlenmeyer flask and the dispersion is stirred for 5 days by the aid of a PTFE coated magnetic stirring bar. Afterwards, the stirring is stopped and the sample is left for sedimentation for 24 h. A volume of the upper dispersion is sampled out, and is injected in water to yield a metastable aqueous graphenium dispersion in DMF/H₂O.

Any volume ratio DMF:H₂O can be used depending on the fraction of organic solvent relative to water that is desired in the final aqueous graphenium dispersion. For example, the following DMF:H₂O volume ratios may be used: 2:1, 1:1, 1:2, 1:3, 1:4, 1:6, 1:8, 1:10, 1:20, 1:30.

### LIST OF REFERENCES

**1.** K. S. Novoselov, A. K. Geim, S. V. Morozov, D. Jiang, Y. Zhang, S. V. Dubonos, I. V. Grigorieva, and A. A. Firsov, "Electric field effect in atomically thin carbon films", Science, 306, 666-669 (2004).
**2.** K. S. Novoselov, A. K. Geim, S. V. Morozov, D. Jiang, M. I, Katsnelson, I. V. Grigorieva, S. V. Dubonos, A. A. Firsov, "Two-dimensional gas of massless Dirac fermions in graphene", Nature, 438, 197-200 (2005).
**3.** WO 2009/087287
**4.** WO 2015/189335
**5.** Stumpp et al. in Materials Science and Engineering, 31 (1997) 53-59.
**6.** J. Bottomley et al., Electrochemical preparation of salts from well-oriented graphite, J. Chem. Soc. (1963), p. 5674.
**7.** D. Dumas et al., Comptes rendus hebdomadaires des seances de l'académie des sciences série C 265 (1967) p. 1395.
**8.** III et al., Biophys. J; 1993, 64: 919-924.
**9.** Penicaud et al., "Spontaneous dissolution of a single-wall carbon nanotube salt", J. Am. Chem. Soc., 27, 8-9, 2005.
**10.** WO 2005/073127
**11.** FR 2 873 381

## Claims

1. A metastable dispersion of graphenium in a polar organic solvent system, water or a mixture of both.

2. Dispersion according to claim 1, wherein the graphenium is fully exfoliated.

3. Dispersion according to claim 1 or 2, which is surfactant-free.

4. A process for preparing a graphenium dispersion in a polar organic solvent system according to any one of claims 1 to 3, comprising steps of:
(a) procuring an acceptor graphite-intercalation-compound;
(b) mixing the acceptor graphite-intercalation-compound of step (a) with a polar organic solvent system to yield a dispersion of graphenium in the polar organic solvent system.

5. A process according to claim 4, wherein the acceptor graphite-intercalation-compound is a stage-1 acceptor graphite-intercalation-compound.

6. A process according to claim 4 or 5, wherein the acceptor graphite-intercalation-compound is prepared by one of:
(i) vapour-phase oxidation of graphite using a suitable oxidant;
(ii) electro-chemical oxidation of graphite using a suitable oxidant;
(iii) oxidation of graphite using a suitable oxidant dissolved in a polar organic solvent system; or
(iv) exposure of graphite to a suitable liquid oxidant.

7. A process according to claim 6, wherein the acceptor graphite-intercalation-compound is prepared by vapour-phase oxidation of graphite, and the process comprises exposure of graphite to vapours of a suitable oxidant under reduced pressure.

8. A process according to claim 7, wherein the acceptor graphite-intercalation-compound is prepared by exposure of graphite to a liquid oxidant, and the process comprises immersing graphite into a suitable liquid oxidant selected from halogen or interhalogen compounds, such as ICI.

9. A process according to any one of claims 6 to 8, wherein the graphite is selected from at least one of natural graphite, synthetic graphite, expanded graphite, microcrystalline graphite and highly ordered pyrolytic graphite.

10. A process according to any one of claims 6 to 9, wherein the oxidant is a halide-based oxidant selected from:
(a) halogen or interhalogen compounds, such as X₂, XX^{A}, X(X^{A})₃, X(X^{A})₅ or X(X^{A})₇;
(b) metal- or metalloid-halides, preferably from groups IB, IIIB, IVA, VB, VA, VIII, VIA, IIIA, VIIA,, IIB, VB the lanthanides, or the actinides; such as CuX₂, AuX₃, BX₃, AlX₃, GaX₃, InX₃, TIX₃, ZrX₄, HfX₄, SbX₅, TaX₅, FeX₃, CrX₃, CrO₂X₂, MoX₅, α-WX₆, UX₄, UO₂X₂, UX₆, ReX₄, CoX₃, RuX₃, RhX₃, PdX₄, PtX₄, IrX₄, YX₃, SmX₃, CdX₃, YbX₃, DyX₃, EuX₃, AsX₅, or SbX₅; or
(c) noble gas-halide compounds such as XeF₄, XeF₆ or XeOF₄;
(d) thionyl or sulfuryl halides, such as SOCl₂ or SO₂Cl₂;
wherein X independently represents a halide selected from F, Br, Cl or I, preferably F, Br or Cl; and X^{A} independently represents F, Br, Cl, preferably Cl;
preferably the oxidant is a halide-based oxidant selected from FeX₃, PdX₄, PtX₄ or IX^{A}; most preferably FeX₃ or IX^{A}; wherein X independently represents a halide selected from F, Br, Cl or I, preferably F, Br or Cl; and X^{A} independently represents F, Br, Cl, preferably Cl.

11. A process according to claim 10, wherein the oxidant is selected from Br₂, ICl, IBr, IF, IF₃, ICl₃, BrF₃, IF₅, BrF₅, IF₇, CuCl₂, CuBr₂, AuCl₃, BCl₃, AlCl₃, GaCl₃, InCL₃, TICl₃, ZrCl₄, HfCl₄, SbCl₅, TaCl₅, FeCl₃, CrCl₃, CrO₂Cl₂, MoCl₅, α-WCl₆, UCl₄, UO₂Cl₂, UF₆, ReCl₄, CoCl₃, RuCL₃, RhCl₃, PdCl₄, PtCl₄, IrCl₄, ICl₃, YCl₃, SmCl₃, CdCl₃, YbCl₃, DyCl₃, EuCl₃, AsF₅, SbF₅, XeF₄, XeF₆, XeOF₄, SOCl₂ or SO₂Cl₂; preferably FeCl₃, PdCl₄, PtCl₄, ICl, SOCl₂ or SO₂Cl₂; more preferably FeCl₃, PdCl₄, PtCl₄, ICl; most preferably FeCl₃ or ICl.

12. A process according to any one of claims 4 to 11, wherein the polar organic solvent system used in step b) comprises one or more polar organic solvent(s) selected from:
- aprotic solvents having a dielectric constant ε ≥ 4 and a dipole moment ≥ 1.00 D, preferably nitrile solvents, polar ethers, preferably having a dielectric constant ε ≥ 4 and a dipole moment ≥ 1.00 D, polar halogenated hydrocarbons, preferably having a dielectric constant ε ≥ 6 and a dipole moment ≥ 1.00 D, ketone solvents, carboxylic ester solvents, alkyl sulfoxide-containing solvents, and amide solvents;
- aromatic solvents having a dielectric constant ε ≥2.20 and a dipole moment > 0.30; and
- protic organic solvents such as alcohols.

13. A process according to any one of claims 4 to 12, wherein the polar organic solvent system used in step b) comprises at least one electron-donating polar organic solvent.

14. A process according to any one of claims 4 to 13, wherein the polar organic solvent system used in step b) comprises one or more polar organic solvent(s) selected from:
- aromatic solvents, preferably having a dielectric constant ε ≥2.20 and a dipole moment > 0.30, such as toluene, o-xylene or m-xylene;
- nitrile solvents such as acetonitrile;
- polar ethers, preferably having a dielectric constant ε ≥ 4 and a dipole moment ≥ 1.00 D, such as tetrahydrofuran (THF), methyl-THF (Me-THF), dimethoxyethane (DME), methyl tert-butyl ether (MTBE), diethyl ether, or CycloPentylMethylEther (CPME);
- polar halogenated hydrocarbons, preferably having a dielectric constant ε ≥ 6 and a dipole moment ≥ 1.00 D such as CH₂Cl₂;
- alcohols such as methanol, ethanol, n-propanol, i-propanol, n-butanol, 2-butanol, n-pentanol, 2-pentanol or n-hexanol; preferably methanol or n-butanol;
- ketone solvents such as acetone, 2-butanone, 2-pentanone, 3-pentanone, cyclopentanone, or cyclohexanone;
- carboxylic ester solvents such as methyl acetate, ethyl acetate, propyl acetate, butyl acetate or methyl propionate;
- alkyl sulfoxide-containing solvents such as dimethylsulfoxide (DMSO) or sulfolane; or
- amide solvents such as N-methylpyrrolidone (NMP), dimethylformamide (DMF), N-methylformamide (NMF), or dimethylacetamide (DMA).

15. A process according to any one of claims 4 to 13, wherein the polar organic solvent system used in step b) is aprotic; preferably toluene, acetonitrile, THF, CH₂Cl₂ or a mixture of two or more thereof; most preferably toluene.

16. A process according to any one of claims 4 to 15 which is carried out under inert atmosphere or ambient air, preferably under inert atmosphere.

17. A process according to any one of claims 4 to 16, further comprising a step (c) of transferring the graphenium dispersion obtained in step (b) into water or an aqueous solvent system, thereby providing a metastable aqueous graphenium dispersion.

18. A process according to any one of claims 4 to 17, further comprising a step of depositing the metastable organic graphenium dispersion obtained in step (b) or the metastable aqueous graphenium dispersion obtained in step (c) on a substrate, to form a film or a coating.

19. A process according to any one of claims 4 to 18, further comprising a step of evaporating the polar organic solvent and/or water.

20. A process according to claim 18 or 19, further comprising a step of rinsing away the intercalant anion from the graphite-intercalation-compound.

21. A process according to any one of claims 4 to 20, which is carried out in the absence of sonication.

22. Deposit, film or coating comprising graphenium.

23. Graphenium obtainable by a method according to claim 19 or 20.

24. Composite material comprising graphenium.

25. Composite material according to claim 24, comprising graphenium sheets bearing metallic particles adsorbed on and/or attached to the graphenium flakes.

26. Composite material according to claim 24 or 25, wherein the graphenium flakes have a lateral size between 100 nm and 100 µm, preferably between 500 nm and 50 µm, between 800 nm and 40 µm, on average about 2 µm.

27. Composite material according to any one of claims 24 to 26, wherein the metallic particles are embedded within the graphenium carbon lattice.

28. Composite material according to any one of claims 24 to 27, wherein the metallic particles adsorbed on and/or attached to the graphenium flakes have a diameter from 0.5 to 100 nm, preferably from 0.5 to 20 nm, preferably from 0.5 to 15 nm, preferably from 0.5 to 10 nm, preferably from 0.5 to 5 nm.

29. Use of a graphenium dispersion according to any one of claims 1 to 3, for depositing graphenium or a graphenium composite on a substrate.

30. Use according to claim 29, wherein the graphenium deposit is carried out by simple deposition, by application, by dip-coating or by spin coating the graphenium dispersion.

31. Use of a polar organic solvent for solubilising an acceptor graphite-intercalation-compound.

32. Use of graphenium according to claim 23 or a graphenium composite material according to any one of claims 24 to 28:
- as catalytic material;
- as electrode material for use in electrocatalysis, for example for applications in fuel cell and energy storage technology;
- as electrocatalyst for oxygen reduction reaction (ORR) or oxygen evolution reaction (OER);
- as bifunctional electrocatalyst for oxygen reduction reaction (ORR) and oxygen evolution reaction (OER);
- as catalyst for gas-phase chemical reactions, such as hydrogenation of CO in the Fischer-Tropsch process;
- as slurry catalyst for liquid-phase chemical reactions, such as liquid phase oxidation processes (such as oxidations of aldehydes to carboxylic acids, benzyl alcohol to benzaldehyde, vanillyl alcohol to vanillin) or liquid phase reduction reactions; and/or
- as catalyst for CO₂ reduction and energy conversion.
